# EUROPEAN PATENT APPLICATION

(11) **EP 3 985 431 A1**
(43) Date of publication of application: **20.04.2022**
(21) Application number: 20823368.4
(22) Date of filing: 02.06.2020
(51) Int. Cl.: G03B 15/00, G03B 17/02, G03B 17/55, G03B 35/08, G01C 3/06, H04N 5/225

(54) **STEREO CAMERA**

(30) Priority: 12.06.2019 JP 2019109748
(71) Applicant: Hitachi Astemo, Ltd., Hitachinaka-shi, Ibaraki 312-8503 (JP)
(72) Inventor: KATOU, Seiichi, Tokyo 100-8280 (JP); SHINOHARA, Hidenori, Hitachinaka-shi, Ibaraki 312-8503 (JP); MASUDA, Keisuke, Hitachinaka-shi, Ibaraki 312-8503 (JP)
(74) Representative: MERH-IP Matias Erny Reichl Hoffmann Patentanwälte PartG mbB
(86) International application number: PCT/JP2020/021703
(87) International publication number: WO 2020/250745

(57) **Abstract**

The present invention provides a stereo camera in which it is possible to suppress increases in the temperature of imaging elements. A stereo camera 201 is provided with a right-left pair of camera modules 5a, 5b, and a casing 1a that accommodates therein the camera modules 5a, 5b and a circuit board 8. The camera modules 5a, 5b respectively include: imaging elements 2a, 2b; imaging-element circuit boards 3a, 3b on which the imaging elements 2a, 2b are respectively mounted; and imaging-element heat dissipation parts 10a, 10b that are respectively adjacent to the imaging-element circuit boards 3a, 3b, and have formed therein holes with the inner surfaces thereof in contact with outside air, said holes running through the casing 1a encompassing the camera modules 5a, 5b.

## Description

### Technical Field

The present invention relates to a stereo camera.

### Background Art

Recently, with the aim of realizing a safe and comfortable automobile society, actual vehicle mounting of the driver assistance system has progressed. Under such circumstances, systems that seek safety, convenience, and comfort of drivers and occupants have been developed, such as a collision damage reduction braking device that automatically performs a stop operation before collision, an inter-vehicle automatic control device that automatically tracks a preceding vehicle, a lane deviation suppression device, and sign recognition. Such systems include an external recognition system that recognizes vehicles, pedestrians, and the like and measures a distance of target objects.

In a stereo camera, which is one of the external recognition systems, an integrated circuit performs processing of extracting a feature point common to a pair of images from a pair of pieces of image information and obtaining the number of pixels (parallax) in which the positions of the feature point are deviated between the pair of images, and a distance is calculated. Therefore, if there is a deviation other than the original parallax between the pair of images, an error occurs in the distance measurement result. Factors of the deviation include temperature rise due to sunlight and heat generation inside the device. When the temperature of the internal component exceeds the upper limit temperature, there is a concern about occurrence of malfunction and reduction of the life of the component.

It is conceivable that the temperature of the imaging element exceeds the upper limit temperature due to its own heat generation with improvement in performance of the stereo camera in particular.

As a conventional technique related to heat dissipation of such a stereo camera, for example, PTL 1 discloses an imaging device including: an imaging optical system; an image pickup device that picks up an image of a subject via the imaging optical system; at least two circuit boards including a first circuit board on which at least the image pickup device is mounted and a second circuit board on which at least an electronic component is mounted; a housing having an opening through which the imaging optical system is exposed to a subject and holding the imaging optical system, the image pickup device, and the circuit boards; a first heat transmission member that is integrally molded with an inner wall of the housing so as to extend in a direction away from the imaging optical system from any of the circuit boards; and a second heat transmission member that transmits heat generated from the image pickup device and the electronic component to the first heat transmission member.

### Citation List

### Patent Literature

PTL 1: JP 2018-50311 A

### Summary of Invention

### Technical Problem

In the conventional technique described above, a circuit element mounted on the circuit board in a stereo camera and the image pickup device mounted on an image pickup device circuit board dissipate heat in a housing via a heat conduction member to reduce temperature rise of the image pickup device. However, since the housing, which is the heat dissipation portion, is common, heat dissipation of each image pickup device is hindered by heat of the circuit element, which is the main heat generation source. In a case where the number of pixels or the like of the imaging element is small as in the conventional technique, the heat generation amount of the imaging element is small and temperature rise is also small. However, it is conceivable that the number of pixels of the imaging element increases along with improvement in performance of the stereo camera such as improvement in angle of view, and the heat generation amount greatly increases, whereby the temperature rise of the imaging element becomes higher. In particular, in an imaging element such as a CMOS, which is important in a stereo camera, the upper limit temperature of the operation guarantee is often lower than that in other components, and it is more important to suppress temperature rise of the imaging element.

The present invention has been made in view of the above, and an object thereof is to provide a stereo camera that can suppress temperature rise of imaging elements.

### Solution to Problem

The present application includes a plurality of means for solving the above-described problem, and as an example is a stereo camera including a pair of left and right camera modules, and a casing that accommodates therein the pair of left and right camera modules and a circuit board, in which the camera module includes an imaging element, an imaging-element circuit board mounted with the imaging element, and an imaging-element heat dissipation part that is adjacent to the imaging-element circuit board and is formed with a hole penetrating the casing that encompasses the camera module and having an inner surface in contact with outside air.

### Advantageous Effects of Invention

According to the present invention, it is possible to suppress temperature rise of imaging elements.

### Brief Description of Drawings

[FIG. 1] FIG. 1 is an upper perspective view illustrating an appearance of a stereo camera according to a first embodiment.
[FIG. 2A] FIG. 2A is a perspective view in FIG. 1.
[FIG. 2B] FIG. 2B is an enlarged view illustrating an extraction of an imaging-element heat dissipation part.
[FIG. 3] FIG. 3 is a cross-sectional view taken along a line A-A in FIG. 1.
[FIG. 4] FIG. 4 is a partially enlarged view transparently illustrating the vicinity of a first imaging-element heat dissipation part.
[FIG. 5] FIG. 5 is an xz plan view in FIG. 4.
[FIG. 6] FIG. 6 is a chart illustrating a temperature rise reduction effect of the imaging element with respect to a first distance in the z axis direction in a hole shape of the imaging-element heat dissipation part.
[FIG. 7] FIG.7 is a chart illustrating a temperature rise reduction effect of the imaging element with respect to a second distance in the x axis direction in a hole shape of the imaging-element heat dissipation part.
[FIG. 8] FIG. 8 is an upper perspective view transparently illustrating an appearance of a stereo camera according to a second embodiment.
[FIG. 9A] FIG. 9A is an upper perspective view transparently illustrating an appearance of a stereo camera according to a third embodiment.
[FIG. 9B] FIG. 9B is an enlarged view illustrating an extraction of the imaging-element heat dissipation part.
[FIG. 10] FIG. 10 is a partially enlarged view transparently illustrating the vicinity of the first imaging-element heat dissipation part.
[FIG. 11A] FIG. 11A is an upper perspective view transparently illustrating an appearance of a stereo camera according to a fourth embodiment.
[FIG. 11B] FIG. 11B is an enlarged view illustrating an extraction of the imaging-element heat dissipation part.
[FIG. 12] FIG. 12 is a partially enlarged view transparently illustrating the vicinity of the first imaging-element heat dissipation part.
[FIG. 13A] FIG. 13A is an upper perspective view transparently illustrating an appearance of a stereo camera according to a fifth embodiment.
[FIG. 13B] FIG. 13B is an enlarged view illustrating an extraction of the imaging-element heat dissipation part.
[FIG. 14] FIG. 14 is a partially enlarged view transparently illustrating the vicinity of the first imaging-element heat dissipation part.
[FIG. 15A] FIG. 15A is an upper perspective view transparently illustrating an appearance of a stereo camera according to a sixth embodiment.
[FIG. 15B] FIG. 15B is an enlarged view illustrating an extraction of the imaging-element heat dissipation part.
[FIG. 16] FIG. 16 is a partially enlarged view transparently illustrating the vicinity of the first imaging-element heat dissipation part.
[FIG. 17] FIG. 17 is an upper perspective view transparently illustrating an appearance of a stereo camera according to a seventh embodiment.
[FIG. 18] FIG. 18 is a cross-sectional view taken along a line B-B in FIG. 17.

### Description of Embodiments

Embodiments of the present invention will be described below with reference to the drawings.

### <First Embodiment>

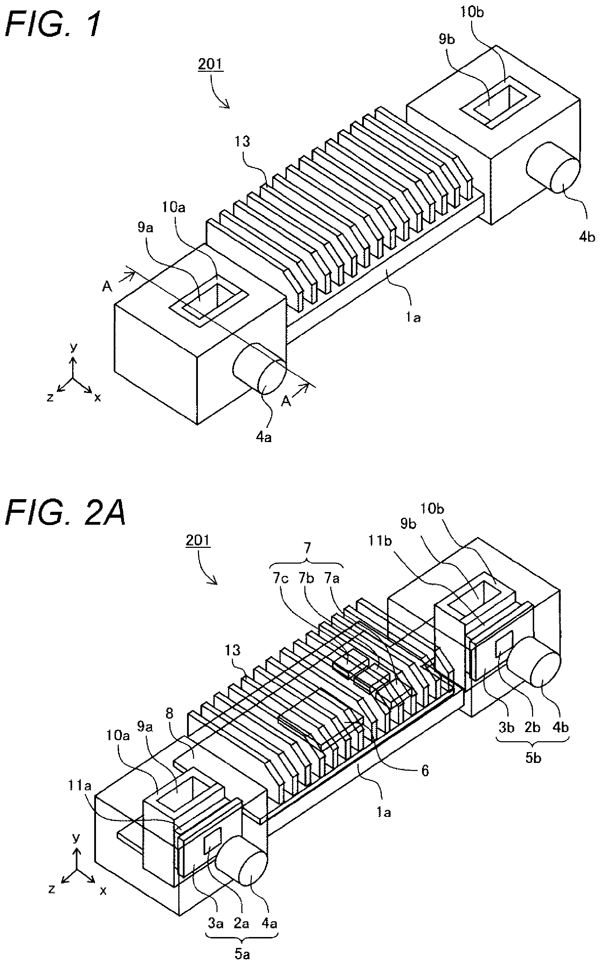

The first embodiment of the present invention will be described with reference to FIGS. 1 to 7.

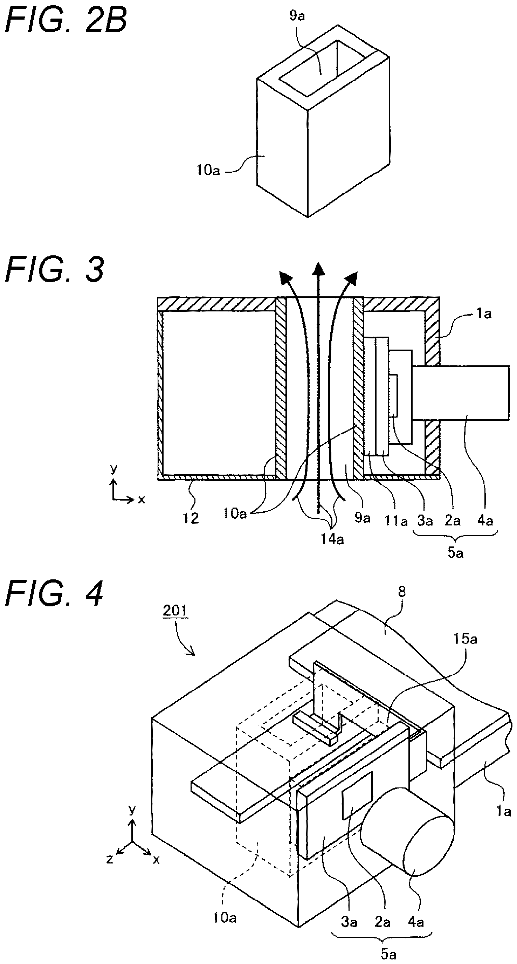

FIGS. 1 and 2A are views illustrating the appearance of the stereo camera according to the present embodiment, where FIG. 1 is an upper perspective view and FIG. 2A is a perspective view in FIG. 1. FIG. 2B is an enlarged view illustrating an extraction of the imaging-element heat dissipation part. Note that, in the present embodiment, the description will be given by setting, for a stereo camera 201, an orthogonal coordinate system defining the x axis with a forward direction being positive in the front-rear direction (optical axis direction of the camera module), the y axis with an upward direction being positive in the up-down direction, the x axis with a rightward direction being positive in the left-right direction, and the z axis with a rightward direction being positive in a direction perpendicular to a plane (zy plane) defined by the x axis and the y axis.

As illustrated in FIGS. 1, 2A, and 2B, the stereo camera 201 includes a first imaging-element circuit board 3a mounted with a first imaging element 2a, a second imaging-element circuit board 3b mounted with a second imaging element 2b, a circuit board 8 mounted with a first circuit element 6 and a second circuit element 7 between the first imaging element 2a and the second imaging element 2b, and a casing 1a accommodating therein the first imaging-element circuit board 3a, the second imaging-element circuit board 3b, and the circuit board 11. The first imaging element 2a is attached to the casing 1a in a set together with a first camera module 5a including the first imaging-element circuit board 3a and a first lens 4a. Similarly, the second imaging element 2b is attached to the casing 1a in a set together with a second camera module 5b including the second imaging-element circuit board 3b and a second lens 4b.

The casing 1a is provided with a hole 9a that penetrates inside in the vicinity of the first imaging element 2a, a first imaging-element heat dissipation part 10a that constitutes the hole 9a and has a portion that dissipates heat to outside air, a hole 9b that penetrates inside in the vicinity of the second imaging element 2b, and a second imaging-element heat dissipation part 10b that constitutes the hole 9b and has a portion that dissipates heat to outside air.

Electrical connection between the vehicle and the stereo camera 201 is performed by connecting wiring to an internal electrical connector via an opening not illustrated on the rear surface of the casing 1a. The stereo camera 201 can obtain the distance to the target object by imaging the front side of the stereo camera 201 by the pair of left and right camera modules 5a and 5b and obtaining the parallax of the target object from a pair of left and right images. Therefore, the number of pixels of the imaging elements 2a and 2b increases and the heat generation amount (power consumption) also greatly increases along with the improvement in performance such as improvement in angle of view and improvement in accuracy of the stereo camera 201, and the temperature rise of the imaging elements 2a and 2b increases due to reduction in surface area along with miniaturization of the stereo camera 201. When the temperature of the imaging elements 2a and 2b becomes high, the noise component of the signal increases, and the measurement accuracy decreases. The first circuit element 6 is a microcomputer, a signal processing element, a field programmable gate array (FPGA), or the like that processes an image signal, and refers to a circuit element that has such a large heat generation amount that requires heat conduction to the casing 1a, a cover 12, and the like. Second circuit elements 7a to 7c used in the first circuit element 6 refer to memories or the like used for temporary storage of data, and the first circuit element 6 has a larger heat generation amount (power consumption) than that of the second circuit element 7.

In an upper portion of the casing 1a, a plurality of fins 13 for heat dissipation are arranged between the first imaging element 2a and the second imaging element 2b.

FIG. 3 is a cross-sectional view taken along the line A-A in FIG. 1.

FIG. 3 illustrates a heat dissipation path of the first imaging element 2a. The imaging-element heat dissipation part 10a has a tubular shape and is thermally connected to the imaging element 2a via the imaging-element circuit board 3a and a heat conduction member 11a. The cover 12 covering the lower surface of the casing 1a has a structure attached to the casing 1a using a screw or the like, and the hole 9a is a hole penetrating the casing 1a and the cover 12. Here, the holes 9a and 9b refer to spaces formed by forming the imaging-element heat dissipation parts 10a and 10b into a tubular shape.

The first imaging element 2a is thermally connected to the first imaging-element heat dissipation part 10a via the first imaging-element circuit board 3a and the first heat conduction member 11a. The first imaging-element heat dissipation part 10a connected to the casing 1a is arranged such that the penetrating direction of the hole 9a is the up-down direction of the stereo camera, whereby updraft 14a from the bottom to the top is likely to occur, and the first imaging-element heat dissipation part 10a has a shape with a high heat dissipation effect. Therefore, the heat transferred to the first imaging-element heat dissipation part 10a is dissipated from the inner wall of the first imaging-element heat dissipation part 10a by the outside air in the hole 9a. The heat dissipation path of the second imaging element 2b is similar to the heat dissipation path of the first imaging element 2a. The imaging-element heat dissipation parts 10a and 10b are connected to the casing 1a and the cover 12, and separates the inside of the stereo camera 201 from the outside air by the tubular shape to hermetically seal the inside of the stereo camera, and can also secure dust-proofness.

The imaging-element heat dissipation parts 10a and 10b may be a molded component such as aluminum die-casting or formed by bending a sheet metal. In FIG. 1, the imaging-element heat dissipation parts have a shape that can be formed into an inexpensive component as a roll-shaped component that can be formed into a sheet metal. In FIG. 2, the first imaging-element heat dissipation part 10a and the second imaging-element heat dissipation part 10b are formed by bending a sheet metal so as to be plane-symmetrical with respect to the xy plane passing through the midpoint between the first imaging element 2a and the second imaging element 2b. However, the first imaging-element heat dissipation part 10a and the second imaging-element heat dissipation part 10b may be formed by bending in the same direction so that they can be shared. By sharing the first imaging-element heat dissipation part 10a and the second imaging-element heat dissipation part 10b, they can be inexpensive components.

FIG. 4 is a partially enlarged view transparently illustrating the vicinity of the first imaging-element heat dissipation part.

As illustrated in FIG. 4, since the first imaging-element heat dissipation part 10a is arranged so as to penetrate inside the stereo camera 201, the wiring from the first imaging element 2a has a wiring 15a structure extending from the z axis direction via the first imaging-element circuit board 3a and connected to the circuit board 8. Here, as shown in FIG. 4, the wiring 15a may be arranged to extend to the circuit board 8 and to be connected to the circuit board from not only the negative direction in the z axis direction but also the positive direction in the z axis direction, and the wiring 15a structure may be a flexible board or the like. A wiring 15b structure of the second imaging element 2b is similar to the wiring 15a structure of the first imaging element 2a. Such a configuration can reduce the temperature of the first imaging element 2a and the temperature of the second imaging element 2b, thereby resulting in the stereo camera 201 with high measurement accuracy and high reliability.

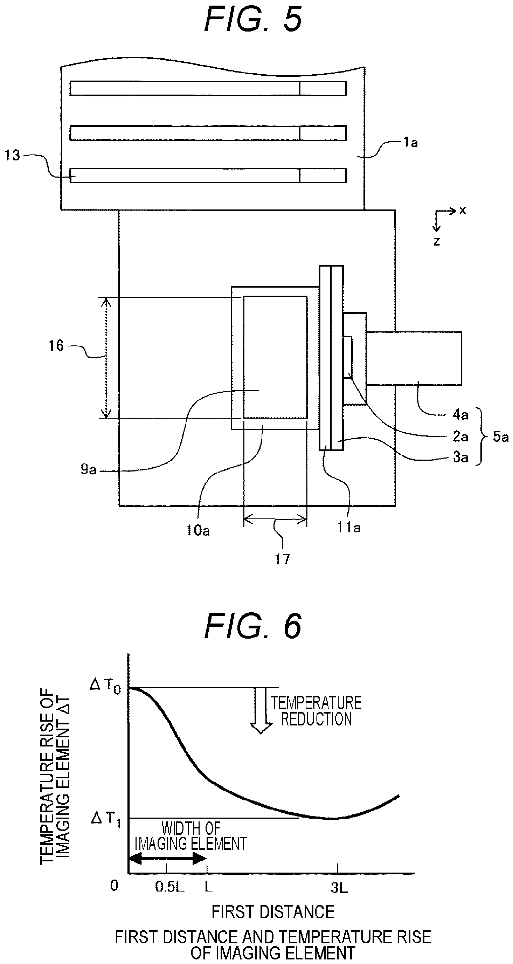

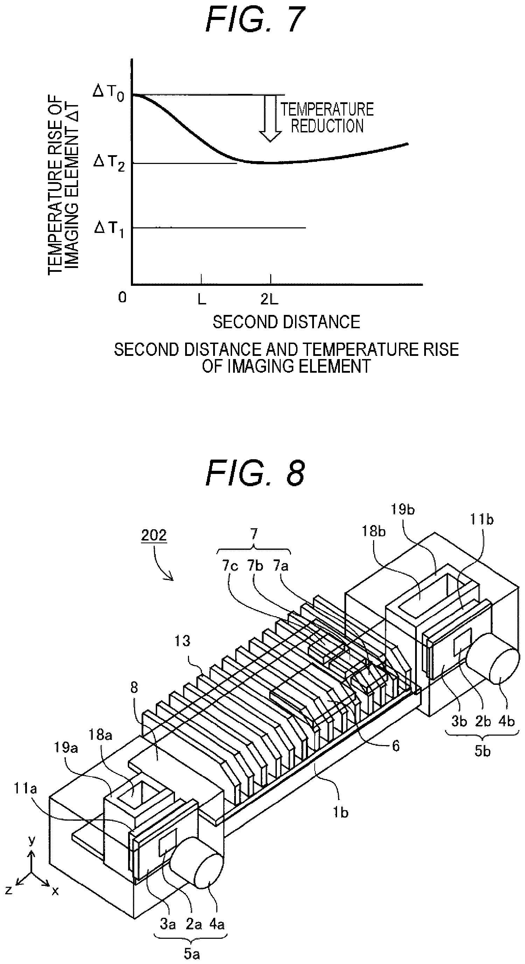

FIG. 5 is an xz plan view in FIG. 4. FIG. 6 is a chart illustrating the temperature rise reduction effect of the imaging element with respect to the first distance in the z axis direction in the hole shape of the imaging-element heat dissipation part, and FIG.7 is a chart illustrating the temperature rise reduction effect of the imaging element with respect to the second distance in the x axis direction in the hole shape of the imaging-element heat dissipation part.

The shapes of the holes 9a and 9b of the imaging-element heat dissipation parts 10a and 10b are configured with a rectangle including the surface along the imaging-element circuit boards 3a and 3b. The holes 9a and 9b penetrating the inside of the imaging-element heat dissipation parts 10a and 10b are arranged on the surfaces of the imaging-element circuit boards 3a and 3b opposite to the surfaces mounted with the imaging elements 2a and 2b, and the imaging-element heat dissipation parts 10a and 10b have the rectangular holes 9a and 9b shapes with a first distance 16 in the z axis direction along the imaging-element circuit boards 3a and 3b and a second distance 17 in the x axis direction. Since one surface of the planes of the holes 9a and 9b shapes is arranged close to the imaging-element circuit boards 3a and 3b, the facing areas of the imaging-element heat dissipation parts 10a and 10b and the imaging-element circuit boards 3a and 3b are large, and the thermal resistance between the imaging-element heat dissipation parts 10a and 10b and the imaging-element circuit boards 3a and 3b can be reduced via the heat conduction members 11a and 11b arranged between the imaging-element heat dissipation parts 10a and 10b and the imaging-element circuit boards 3a and 3b. By reducing the thermal resistance, the heat of the imaging-element circuit boards 3a and 3b can be efficiently transferred to the imaging-element heat dissipation parts 10a and 10b, and the heat dissipation efficiency can be improved. That is, temperature rise of the imaging elements 2a and 2b can be reduced. As a method of reducing the thermal resistance, a structure may be employed in which an electrical ground layer is increased in the imaging-element circuit boards 3a and 3b, a thick copper layer (a layer in which the thickness of a layer in which electricity is conducted in the boards is increased) is provided, or a metal reinforcing plate or the like is provided, whereby heat is transferred into the surfaces of the imaging-element circuit boards 3a and 3b, and heat is transferred to the imaging-element heat dissipation parts 10a and 10b via the heat conduction members 11a and 11b.

In FIG. 5, regarding the temperature rise reduction effect of the imaging elements 2a and 2b with respect to the first distance 16, the longer the first distance 16 constituting the heat dissipation surface closest to the imaging elements 2a and 2b is, the higher the temperature rise reduction effect of the imaging elements 2a and 2b is, and the temperature rise reduction effect of the imaging elements 2a and 2b is rapidly improved when the distance becomes equal to or longer than the distance (about 1/2 or more of the widths of the imaging elements 2a and 2b) at which air easily flows in the holes 9a and 9b. Thereafter, the temperature rise reduction effect of the imaging elements 2a and 2b increases beyond the widths (z axis direction) of the imaging elements 2a and 2b up to a distance of about three times the widths (z axis direction) of the imaging elements 2a and 2b. When the distance becomes larger than about 3 times the widths (z axis direction) of the imaging elements 2a and 2b, the holes 9a and 9b of the casing 1a become large, the flow speeds of the updrafts 14a and 14b decrease, and the surface area of the casing 1a is also reduced, and hence the temperature rise reduction effect of the imaging elements 2a and 2b decreases. The first distance 16 effective as the temperature rise reduction effect of the imaging elements 2a and 2b is about 1/2 of the width of the imaging element to about 3 times the width of the imaging element.

Similarly, the temperature rise reduction effect of the imaging elements 2a and 2b with respect to the second distance 17 is lower than that of the first distance 16, but the temperature rise reduction effect of the imaging elements 2a and 2b is rapidly improved when the distance becomes equal to or longer than the distance at which air easily flows in the holes 9a and 9b.

Thereafter, the temperature rise reduction effect of the imaging elements 2a and 2b increases up to a certain distance in the x axis direction. When the distance becomes equal to or longer than a certain distance, the holes 9a and 9b of the casing 1a increase, the flow speeds of the updrafts 14a and 14b decrease, and the surface area of the casing 1a is also reduced, and hence the temperature rise reduction effect of the imaging elements 2a and 2b decreases. Here, the temperature rise reduction effect of the imaging elements 2a and 2b with respect to the second distance 17 is smaller than that with respect to the first distance 16 constituting the heat dissipation surface closest to the imaging elements 2a and 2b. That is, the first distance 16 in the z axis direction along the imaging-element circuit boards 3a and 3b has a larger temperature rise reduction effect of the imaging elements 2a and 2b than that of the second distance 17 in the x axis direction. The holes 9a and 9b penetrating the inside of the imaging-element heat dissipation parts 10a and 10b are preferably rectangular with the first distance 16 in the z axis direction as a long side and the second distance 17 in the x axis direction as a short side. Since the ratio between the temperature rise reduction effect of the imaging elements 2a and 2b of the first distance 16 and the temperature rise reduction effect of the imaging elements 2a and 2b of the second distance 17 is about 2:1 ((ΔT0 - ΔT1) : (ΔT0 - ΔT2) ≈ 2:1), the rectangular holes 9a and 9b shapes with which the first distance 16 in the z axis direction as a long side, the second distance 17 in the x axis direction as a short side, and the second distance 17 being about a half of the first distance 16 are preferable.

Here, the holes 9a and 9b penetrating the inside of the imaging-element heat dissipation parts 10a and 10b are rectangular. However, since a structure with good adhesion between the imaging-element heat dissipation parts 10a and 10b and the imaging-element circuit boards 3a and 3b is desired, the shapes of the holes 9a and 9b are formed such that the connection surface shape on the imaging-element circuit boards 3a and 3b side is a flat surface, and the shapes in other directions can be free. For example, a hole shape penetrating the inside of the imaging-element heat dissipation part may be a semicircle, and a plane of a diameter portion (straight portion) of the hole shape may be arranged in parallel with the imaging-element circuit boards 3a and 3b.

In a case where the number of pixels or the like of the imaging element is small as in the conventional technique, the heat generation amount of the imaging element is small and temperature rise is also small. However, it is conceivable that the number of pixels of the imaging element increases along with improvement in performance of the stereo camera such as improvement in angle of view, and the heat generation amount greatly increases, whereby the temperature rise of the imaging element becomes higher. In particular, in an imaging element such as a CMOS, which is important in a stereo camera, the upper limit temperature of the operation guarantee is often lower than that in other components, and it is more important to suppress temperature rise of the imaging element.

For such a problem, the present embodiment is configured to include the imaging element, the imaging-element circuit board mounted with the imaging element, the casing that encompasses the imaging-element circuit board, and the imaging-element heat dissipation part in which the hole penetrating the casing and having the inner surface in contact with outside air, and hence temperature rise of the imaging element can be suppressed.

### <Second Embodiment>

The second embodiment of the present invention will be described with reference to FIG. 8. In the present embodiment, only differences from the first embodiment will be described, and members similar to those of the first embodiment in the figures used in the present embodiment are given the same reference signs, and description thereof will be omitted.

FIG. 8 is an upper perspective view transparently illustrating the appearance of the stereo camera according to the present embodiment. Note that, in the present embodiment, the description will be given by setting, for a stereo camera 202, an orthogonal coordinate system defining the x axis with a forward direction being positive in the front-rear direction (optical axis direction of the camera module), the y axis with an upward direction being positive in the up-down direction, the x axis with a rightward direction being positive in the left-right direction, and the z axis with a rightward direction being positive in a direction perpendicular to a plane (zy plane) defined by the x axis and the y axis.

In FIG. 8, similarly to the first embodiment, a casing 1b is provided with a hole 18a that penetrates inside in the vicinity of the first imaging element 2a, a first imaging-element heat dissipation part 19a that constitutes the hole 18a and has a portion that dissipates heat to outside air, a hole 18b that penetrates inside in the vicinity of the second imaging element 2b, and a second imaging-element heat dissipation part 19b that constitutes the hole 18b and has a portion that dissipates heat to outside air. The imaging-element heat dissipation parts 19a and 19b have tubular shapes and are thermally connected to the imaging elements 2a and 2b via the imaging-element circuit boards 3a and 3b the heat conduction members 11a and 11b.

Here, in a case where the first circuit element 6 of the circuit board 8 of the stereo camera 202 comes close to the second imaging element 2b side, the second imaging-element heat dissipation part 19b on the side close to the first circuit element 6 has a larger shape than that of the first imaging-element heat dissipation part 19a. When the first circuit element 6 of the circuit board 8 of the stereo camera 202 comes close to the second imaging element 2b side, the heat generation distribution center of the stereo camera 202 comes close to the second imaging element 2b side, and the temperature becomes higher in the second imaging element 2b than in the first imaging element 2a. When a difference occurs in temperature between the first imaging element 2a and the second imaging element 2b, a difference occurs in noise components of the signals of the first imaging element 2a and the second imaging element 2b due to temperature, which causes a difference in external environment recognition and causes a decrease in accuracy of a measurement distance or the like. When the temperature of the first imaging element 2a and the temperature of the second imaging element 2b increase, the noise component of the signal increases, and the measurement accuracy decreases.

In the present embodiment, by making the second imaging-element heat dissipation part 19b larger than the first imaging-element heat dissipation part 19a and improving the heat dissipation on the second imaging element 2b side, the temperatures of the first imaging element 2a and the second imaging element 2b can be made equal.

In a case where the first circuit element 6 comes close to the first imaging element 2a side, on the contrary, if the first imaging-element heat dissipation part 19a on the side close to the first circuit element 6 has a larger shape than that of the second imaging-element heat dissipation part 19b, the temperatures of the first imaging element 2a and the second imaging element 2b can be made equal.

Other configurations are similar to those of the first embodiment.

Also in the present embodiment configured as described above, the same effects as those of the first embodiment can be obtained.

In the present embodiment, the temperature of the first imaging element 2a and the temperature of the second imaging element 2b can be made equal, and a temperature rise can be suppressed, so that it is possible to provide a stereo camera with high measurement accuracy and high reliability.

### <Third Embodiment>

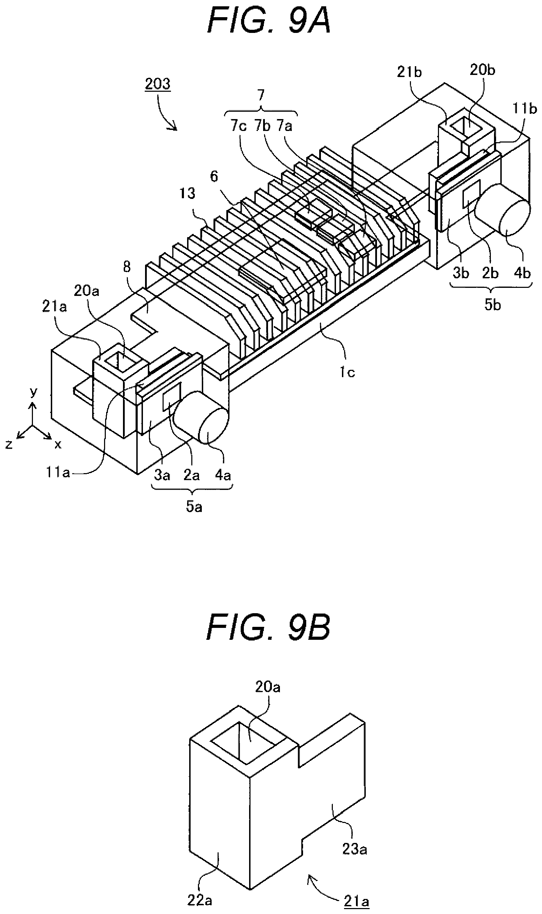

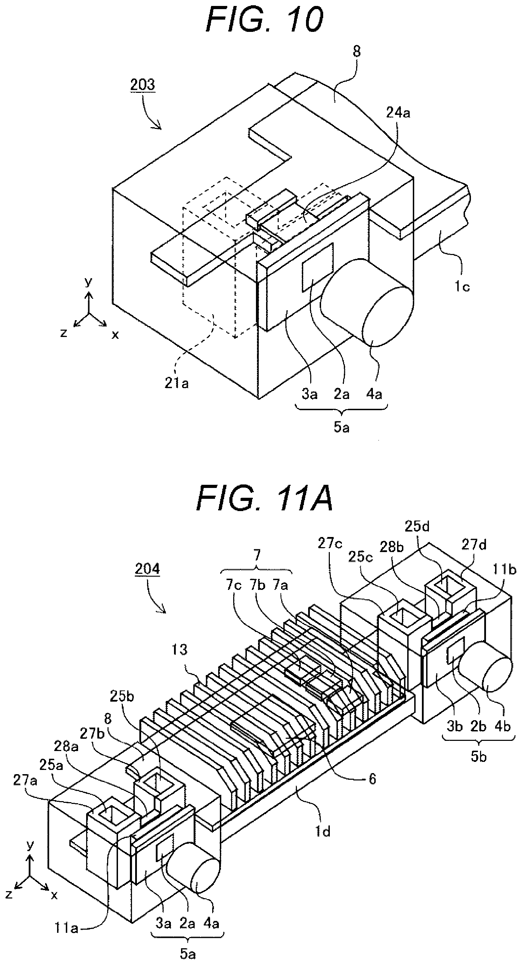

The third embodiment of the present invention will be described with reference to FIGS. 9A, 9B, and 10. In the present embodiment, only differences from the first embodiment will be described, and members similar to those of the first embodiment in the figures used in the present embodiment are given the same reference signs, and description thereof will be omitted.

FIG. 9A is an upper perspective view transparently illustrating the appearance of the stereo camera according to the present embodiment, and FIG. 9B is an enlarged view illustrating an extraction of the imaging-element heat dissipation part. FIG. 10 is a partially enlarged view transparently illustrating the vicinity of the first imaging-element heat dissipation part. Note that, in the present embodiment, the description will be given by setting, for a stereo camera 203, an orthogonal coordinate system defining the x axis with a forward direction being positive in the front-rear direction (optical axis direction of the camera module), the y axis with an upward direction being positive in the up-down direction, the x axis with a rightward direction being positive in the left-right direction, and the z axis with a rightward direction being positive in a direction perpendicular to a plane (zy plane) defined by the x axis and the y axis.

In FIGS. 9A, 9B, and 10, a casing 1c is provided with a hole 20a that penetrates inside in the vicinity of the first imaging element 2a in a direction away from the first imaging element 2a on the opposite side of the second imaging element 2b in the z axis direction. A first imaging-element heat dissipation part 21a that constitutes the hole 20a and has a portion that dissipates heat to outside air is provided. The first imaging-element heat dissipation part 21a has a shape including a tubular portion 22a and a plate-like portion 23a, and the plate-like portion 22b extending from the tubular portion 22a is arranged along the imaging-element circuit board 3a on the surface opposite to the surface mounted with the imaging element 2a. The first imaging element 2a is thermally connected to the plate-like portion 23a of the first imaging-element heat dissipation part 21a via the first imaging-element circuit board 3a and the first heat conduction member 11a. Therefore, the heat dissipation path of the first imaging element 2a is a path in which the heat passes from the first imaging element 2a through the first imaging-element circuit board 3a, is transmitted to the plate-like portion 23a of the first imaging-element heat dissipation part 21a via the first heat conduction member 11a, and is dissipated from the inner wall of the hole 20a of the tubular portion 22a of the first imaging-element heat dissipation part 21a by the outside air in the hole 20a.

Similarly, a casing 1c is provided with a hole 20b that penetrates inside in the vicinity of the second imaging element 2b in a direction away from the second imaging element 2b on the opposite side of the first imaging element 2a in the z axis direction. A second imaging-element heat dissipation part 21b that constitutes the hole 20b and has a portion that dissipates heat to outside air is provided.

By providing the shape of the first imaging-element heat dissipation part 21a, wiring 24a from the first imaging-element circuit board 3a to the circuit board 8 can be arranged from the lower surface direction. In other words, by shortening the length of the wiring 24a, noise received from the outside by the wiring 24a can be reduced, and by processing a signal with less noise, the stereo camera 203 with high measurement accuracy and high reliability is provided. Similarly, noise transmitted from the wiring 24a to the outside can be reduced, and the stereo camera 203 with high reliability that does not interfere with other devices is provided. A wiring 24b structure of the second imaging element 2b is similar to the wiring 24a structure of the first imaging element 2a.

Here, if the position of the hole 20a through which the first imaging-element heat dissipation part 21a penetrates is arranged in a direction away from the first imaging element 2a on the opposite side of the second imaging element 2b in the z axis direction, the position of the hole 20a through which the first imaging-element heat dissipation part 21a penetrates is arranged at a position away from the first circuit element 6, and hence the temperature of the penetrating hole 20a portion decreases and the temperature rise of the first imaging element 2a can be effectively reduced. On the other hand, if the position of the hole 20a through which the first imaging-element heat dissipation part 21a penetrates is arranged in a direction approaching the second imaging element 2b in the z axis direction, a passage of air is formed between the first circuit element 6 and the first imaging element 2a, heat dissipation of the first imaging element 2a and heat dissipation of the first circuit element 6 are facilitated, and thus temperature rise of the first imaging element 2a can be reduced and temperature rise of the first circuit element 6 can be reduced. The second imaging-element heat dissipation part 21b has a similar effect.

Other configurations are similar to those of the first embodiment.

Also in the present embodiment configured as described above, the same effects as those of the first embodiment can be obtained.

### <Fourth Embodiment>

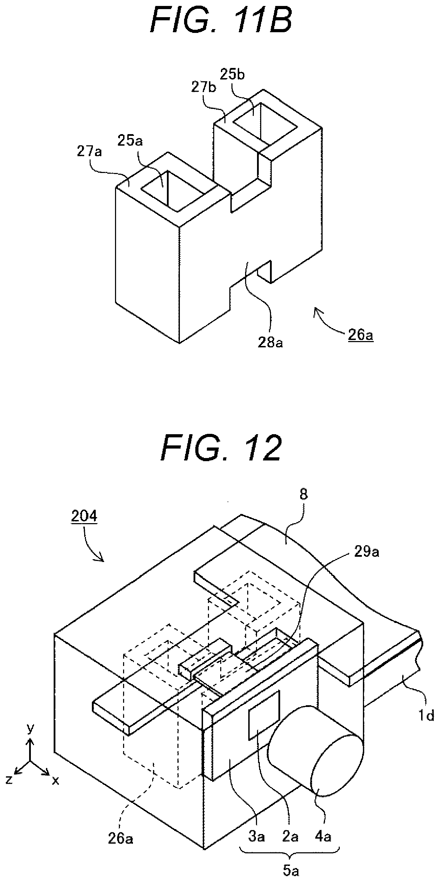

The fourth embodiment of the present invention will be described with reference to FIGS. 11A, 11B, and 12. In the present embodiment, only differences from the first embodiment will be described, and members similar to those of the first embodiment in the figures used in the present embodiment are given the same reference signs, and description thereof will be omitted.

FIG. 11A is an upper perspective view transparently illustrating the appearance of the stereo camera according to the present embodiment, and FIG. 11B is an enlarged view illustrating an extraction of the imaging-element heat dissipation part. FIG. 12 is a partially enlarged view transparently illustrating the vicinity of the first imaging-element heat dissipation part. Note that, in the present embodiment, the description will be given by setting, for a stereo camera 204, an orthogonal coordinate system defining the x axis with a forward direction being positive in the front-rear direction (optical axis direction of the camera module), the y axis with an upward direction being positive in the up-down direction, the x axis with a rightward direction being positive in the left-right direction, and the z axis with a rightward direction being positive in a direction perpendicular to a plane (zy plane) defined by the x axis and the y axis.

In FIGS. 9A, 9B, and 10, a casing 1d is provided with a first hole 25a that penetrates inside in the vicinity of the first imaging element 2a in a direction away from the first imaging element 2a on a side opposite to the second imaging element 2b in the z axis direction, a second hole 25b in a direction approaching the second imaging element 2b in the z axis direction, and a first imaging-element heat dissipation part 26a that constitutes the first hole 25a and the second hole 25b and has a portion that dissipates heat to outside air. The imaging-element heat dissipation part 26a is provided with a plate-like portion 28a connecting the two penetrating tubular holes 25a and 25b, and has a shape including the two tubular holes 25a and 25b and the plate-like portion 28a. The plate-like portion 28a is arranged along the first imaging-element circuit board 3a on the surface opposite to the surface mounted with the first imaging element 2a. Similarly, a second imaging-element heat dissipation part 26b is arranged also in the second imaging element 2b.

The first imaging element 2a is thermally connected to the plate-like portion 28a of the first imaging-element heat dissipation part 26a via the first imaging-element circuit board 3a and the first heat conduction member 11a. Therefore, the heat dissipation path of the first imaging element 2a is a path in which the heat passes from the first imaging element 2a through the first imaging-element circuit board 3a, is transmitted to the plate-like portion 28a of the first imaging-element heat dissipation part 26a via the first heat conduction member 11a, and is dissipated from the inner wall of the holes 25a and 25b of two tubular portions of the first imaging-element heat dissipation part 26a by the outside air in the holes 25a and 25b.

Here, when the first hole 25a is arranged in a direction away from the first imaging element 2a on the opposite side to the second imaging element 2b in the z axis direction, the position of the first hole 25a through which the first imaging-element heat dissipation part 26a penetrates becomes a position away from the first circuit element 6, and thus the temperature of the penetrating hole 25a portion decreases, and temperature rise of the first imaging element 2a can be effectively reduced. On the other hand, if the position of the second hole 25b is arranged in a direction approaching the second imaging element 2b in the z axis direction, a passage of air is formed between the first circuit element 6 and the first imaging element 2a, heat dissipation of the first imaging element 2a and heat dissipation of the first circuit element 6 are facilitated, and thus temperature rise of the first imaging element 2a can be reduced and temperature rise of the first circuit element 6 can be reduced.

By providing the first hole 25a and the second hole 25b, the surface areas of the inner walls of the tubular holes 25a and 25b can also be increased, the heat dissipation efficiency is improved, and the temperature of the first imaging element 2a, the temperature of the second imaging element 2b, and the temperature of the first circuit element 6 can also be reduced.

In the present embodiment, by providing the shape of the first imaging-element heat dissipation part 26a, wiring 29a from the first imaging-element circuit board 3a to the circuit board 8 can be arranged from the lower surface direction between the two penetrating holes 25a and 25b. In other words, by shortening the length of the wiring 29a, noise received from the outside by the wiring 29a can be reduced, and by processing a signal with less noise, the stereo camera 204 with high measurement accuracy and high reliability is provided. Similarly, noise transmitted from the wiring 29a to the outside can be reduced, and the stereo camera 204 with high reliability that does not interfere with other devices is provided. A wiring 29b structure of the second imaging element 2b is similar to the wiring 29a structure of the first imaging element 2a.

Other configurations are similar to those of the first embodiment.

Also in the present embodiment configured as described above, the same effects as those of the first embodiment can be obtained.

### <Fifth Embodiment>

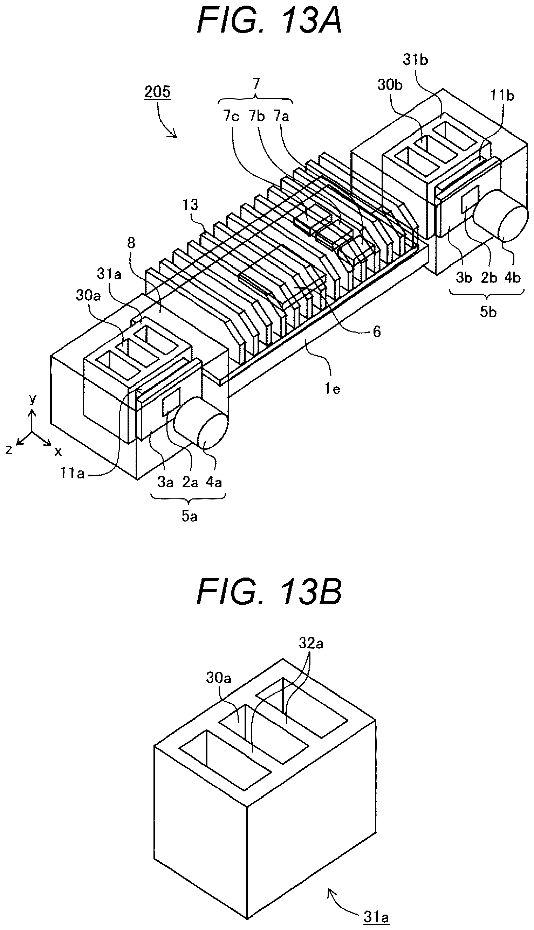

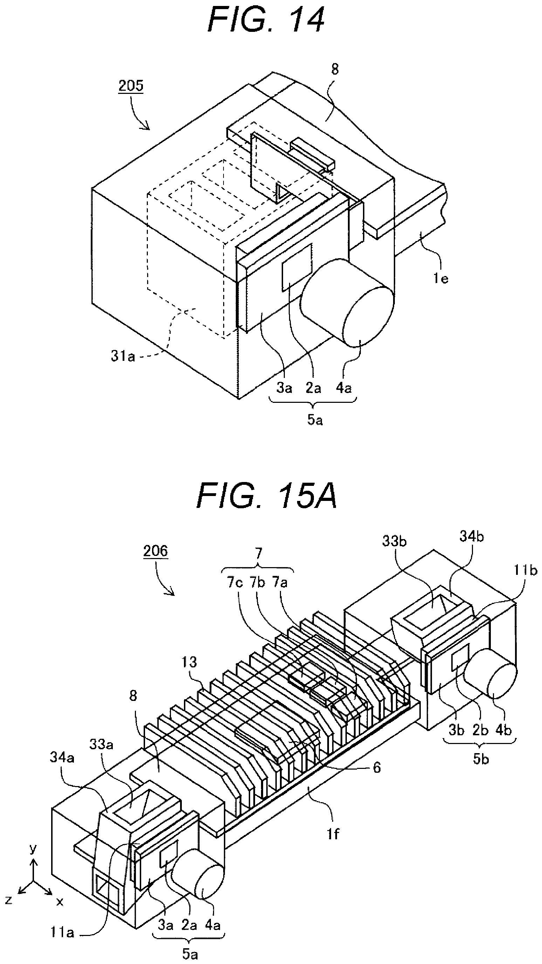

The fifth embodiment of the present invention will be described with reference to FIGS. 13A, 13B, and 14. In the present embodiment, only differences from the first embodiment will be described, and members similar to those of the first embodiment in the figures used in the present embodiment are given the same reference signs, and description thereof will be omitted.

FIG. 13A is an upper perspective view transparently illustrating the appearance of the stereo camera according to the present embodiment, and FIG. 13B is an enlarged view illustrating an extraction of the imaging-element heat dissipation part. FIG. 14 is a partially enlarged view transparently illustrating the vicinity of the first imaging-element heat dissipation part. Note that, in the present embodiment, the description will be given by setting, for a stereo camera 205, an orthogonal coordinate system defining the x axis with a forward direction being positive in the front-rear direction (optical axis direction of the camera module), the y axis with an upward direction being positive in the up-down direction, the x axis with a rightward direction being positive in the left-right direction, and the z axis with a rightward direction being positive in a direction perpendicular to a plane (zy plane) defined by the x axis and the y axis.

In FIGS. 13A, 13B, and 14, a casing 1e is provided with a hole 30a that penetrates inside in the vicinity of the first imaging element 2a, and a first imaging-element heat dissipation part 31a that constitutes the hole 30a. The hole 30a penetrating the inside of the first imaging-element heat dissipation part 31a is a grid 32a, and is arranged on the surface of the first imaging-element circuit board 3a opposite to the surface mounted with the first imaging element 2a. One surface of the plane of the hole 30a shape is arranged close to the first imaging-element circuit board 3a, and the orientation of the grid 32a is provided in the x axis direction. The heat dissipation path of the first imaging element 2a is a path in which the heat is transmitted to the first imaging-element heat dissipation part 31a via the first imaging-element circuit board 3a and the first heat conduction member 11a, and is dissipated from the inner wall of the grid 32a of the first imaging-element heat dissipation part 31a by the outside air in the hole. Therefore, since the surface area capable of dissipating heat increases by the number of grids 32a, the heat dissipation of the first imaging element 2a is improved, and there is an effect in temperature rise reduction of the first imaging element 2a. Here, the heat in the z axis direction and the y axis direction of the first imaging element 2a is efficiently spread on the surface of the first imaging-element heat dissipation part 31a connected to the first imaging-element circuit board 3a. On the other hand, the heat in the x axis direction of the first imaging element 2a is efficiently spread in the x axis direction with the orientation of the grid 32a of the first imaging-element heat dissipation part 31a as the x axis direction. Therefore, the first imaging-element heat dissipation part 31a spreads the heat of the first imaging element 2a in the x axis direction, the y axis direction, and the z axis direction, and has a structure with high heat dissipation efficiency. Similarly, a second imaging-element heat dissipation part 31b is arranged also in the second imaging element 2b. Here, the grids 32a and 32b of the imaging-element heat dissipation parts 31a and 31b may be a plurality of tubular shaped connections.

Other configurations are similar to those of the first embodiment.

Also in the present embodiment configured as described above, the same effects as those of the first embodiment can be obtained.

### <Sixth Embodiment>

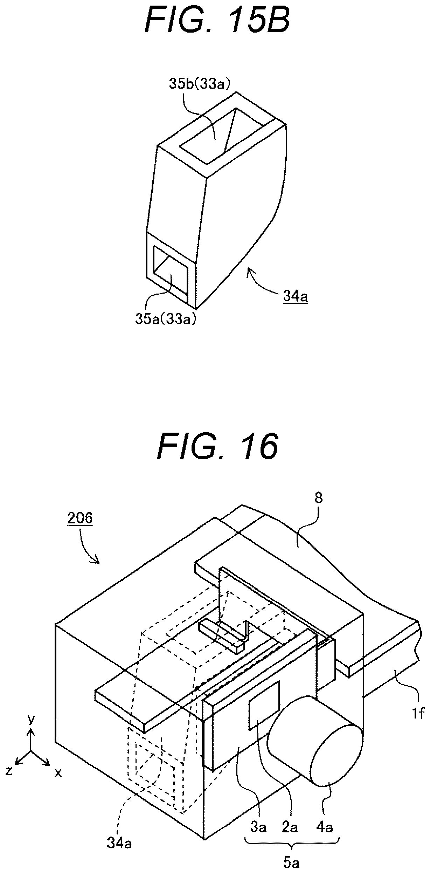

The sixth embodiment of the present invention will be described with reference to FIGS. 15A, 15B, and 16. In the present embodiment, only differences from the first embodiment will be described, and members similar to those of the first embodiment in the figures used in the present embodiment are given the same reference signs, and description thereof will be omitted.

FIG. 15A is an upper perspective view transparently illustrating the appearance of the stereo camera according to the present embodiment, and FIG. 15B is an enlarged view illustrating an extraction of the imaging-element heat dissipation part. FIG. 16 is a partially enlarged view transparently illustrating the vicinity of the first imaging-element heat dissipation part. Note that, in the present embodiment, the description will be given by setting, for a stereo camera 206, an orthogonal coordinate system defining the x axis with a forward direction being positive in the front-rear direction (optical axis direction of the camera module), the y axis with an upward direction being positive in the up-down direction, the x axis with a rightward direction being positive in the left-right direction, and the z axis with a rightward direction being positive in a direction perpendicular to a plane (zy plane) defined by the x axis and the y axis.

In FIGS. 15A, 15B, and 16, a casing 1f is provided with a hole 33a that penetrates inside in the vicinity of the first imaging element 2a, and a first imaging-element heat dissipation part 34a that constitutes the hole 33a. The hole 33a penetrating the inside of the first imaging-element heat dissipation part 34a is the penetrating hole 33a that connects the close side surface in the z axis direction of the casing 1f where one opening 35a is provided and the upper surface of the stereo camera 206 in the y axis positive direction of the casing 1f where the other opening 35b is provided. The hole 33a is arranged on the first imaging-element circuit board 3a on the surface opposite to the surface mounted with the first imaging element 2a, and one surface of a hole-shape plane is arranged close to the first imaging-element circuit board 3a. By taking in air from the opening 35a having a low temperature of the stereo camera 206 on the side surface far from the circuit board 8 in the stereo camera 206, and flowing the air toward the opening 35b on the upper surface, it is possible to improve the heat dissipation performance of the first imaging-element heat dissipation part 34a and reduce the temperature rise of the first imaging element 2a. Similarly, a second imaging-element heat dissipation part 34b is arranged also in the second imaging element 2b.

Other configurations are similar to those of the first embodiment.

Also in the present embodiment configured as described above, the same effects as those of the first embodiment can be obtained.

### <Seventh Embodiment>

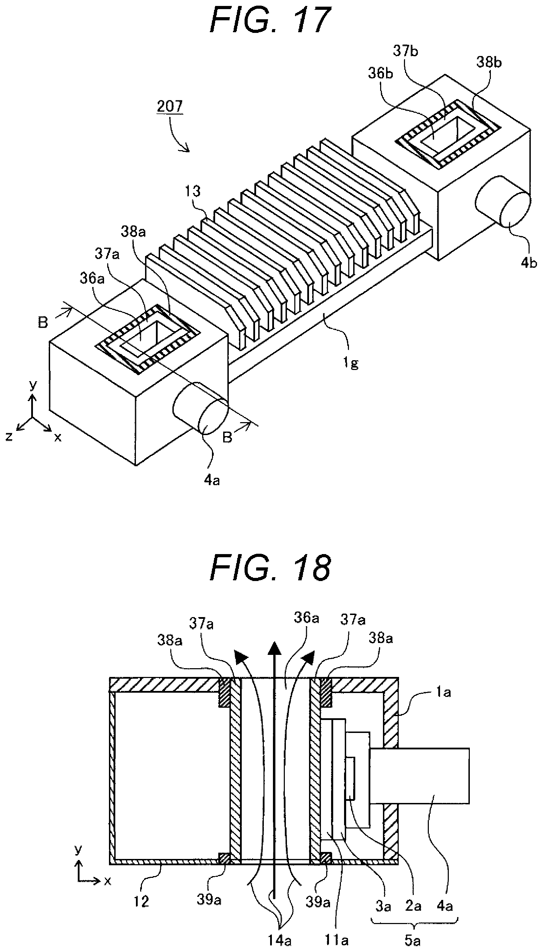

The seventh embodiment of the present invention will be described with reference to FIGS. 17 and 18. In the present embodiment, only differences from the first embodiment will be described, and members similar to those of the first embodiment in the figures used in the present embodiment are given the same reference signs, and description thereof will be omitted.

FIG. 17A is an upper perspective view transparently illustrating the appearance of the stereo camera according to the present embodiment. FIG. 18 is a cross-sectional view taken along the line B-B in FIG. 17. Note that, in the present embodiment, the description will be given by setting, for a stereo camera 207, an orthogonal coordinate system defining the x axis with a forward direction being positive in the front-rear direction (optical axis direction of the camera module), the y axis with an upward direction being positive in the up-down direction, the x axis with a rightward direction being positive in the left-right direction, and the z axis with a rightward direction being positive in a direction perpendicular to a plane (zy plane) defined by the x axis and the y axis.

In FIGS. 15A, 15B, and 16, a casing 1g is provided with a hole 36a that penetrates inside in the vicinity of the first imaging element 2a, and a first imaging-element heat dissipation part 37a that constitutes the hole 36a and has a portion that dissipates heat to outside air. The first imaging-element heat dissipation part 37a has a tubular shape and is thermally connected to the first imaging element 2a via the first imaging-element circuit board 3a and the first heat conduction member 11a. Therefore, the heat dissipation path of the first imaging element 2a is a path in which the heat passes from the first imaging element 2a through the first imaging-element circuit board 3a, is transmitted to the first imaging-element heat dissipation part 37a via the first heat conduction member 11a, and is dissipated from the inner wall of the first imaging-element heat dissipation part 37a by the outside air in the hole 36a. At this time, a first connection member 38a having low thermal conductivity such as resin is held between the casing 1g and the first imaging-element heat dissipation part 37a, and similarly, a second connection member 39a having low thermal conductivity such as resin is held between the cover 12 and the first imaging-element heat dissipation part 37a. By preventing conduction of heat from the casing 1g and the cover 12 by the first connection member 38a and the second connection member 39a and using the first imaging-element heat dissipation part 37a mainly only for heat dissipation of the first imaging element 2a, it is possible to reduce temperature rise of the first imaging element 2a and to lower the temperature rise of the first imaging element 2a regardless of the heat generation state of the circuit board 8 (the operation state of the stereo camera 207). Similarly, a second imaging-element heat dissipation part 37b is arranged also in the second imaging element 2b, and the first connection member 38b and the second connection member 39b are held between the casing 1g, the cover 12, and the second imaging-element heat dissipation part 37b.

Other configurations are similar to those of the first embodiment.

Also in the present embodiment configured as described above, the same effects as those of the first embodiment can be obtained.

### <Supplementary Notes>

The present invention is not limited to the above-described embodiments, and includes various modifications and combinations in the range not departing from the scope the present invention. The present invention is not limited to those including all the configurations described in the above embodiments, and also includes those in which parts of the configurations are removed.

### Reference Signs List

- 1a: to 1g casing
- 2a: first imaging element
- 2b: second imaging element
- 3a: first imaging-element circuit board
- 3b: second imaging-element circuit board
- 4a: first lens
- 4b: second lens
- 5a: first camera module
- 5b: second camera module
- 6: first circuit element
- 7, 7a, 7b, 7c: second circuit element
- 8: circuit board
- 9a, 9b: hole
- 10a: first imaging-element heat dissipation part
- 10b: second imaging-element heat dissipation part
- 11: circuit board
- 11a: first heat conduction member
- 11b: second heat conduction member
- 12: cover
- 13: fin
- 14a, 14b: updraft
- 15a, 15b: wiring
- 16: first distance
- 17: second distance
- 18a, 18b: hole
- 19a: first imaging-element heat dissipation part
- 19b: second imaging-element heat dissipation part
- 20a, 20b: hole
- 21a: first imaging-element heat dissipation part
- 21b: second imaging-element heat dissipation part
- 24a, 24b: wiring
- 25a: first hole
- 25b: second hole
- 26a: first imaging-element heat dissipation part
- 26b: second imaging-element heat dissipation part
- 29a, 29b: wiring
- 30a: hole
- 31a: first imaging-element heat dissipation part
- 31b: second imaging-element heat dissipation part
- 32a, 32b: grid
- 33a: hole
- 34a: first imaging-element heat dissipation part
- 34b: second imaging-element heat dissipation part
- 35a, 35b: opening
- 36a: hole
- 37a: first imaging-element heat dissipation part
- 37b: second imaging-element heat dissipation part
- 38a, 38b: first connection member
- 39a, 39b: second connection member
- 201: to 207 stereo camera

## Claims

1. A stereo camera, comprising:
a pair of left and right camera modules; and
a casing that accommodates therein the pair of left and right camera modules and a circuit board,
wherein the camera module includes
an imaging element,
an imaging-element circuit board mounted with the imaging element, and
an imaging-element heat dissipation part that is adjacent to the imaging-element circuit board and is formed with a hole penetrating the casing that encompasses the camera module and having an inner surface in contact with outside air.

2. The stereo camera according to claim 1, wherein the imaging-element heat dissipation part is arranged adjacent to a surface of the imaging-element circuit board opposite to a surface mounted with the imaging element.

3. The stereo camera according to claim 1 or 2, wherein the imaging-element heat dissipation part has a tubular shape including a surface along the imaging-element circuit board.

4. The stereo camera according to claim 3, wherein the imaging-element heat dissipation part is formed such that a cross-sectional shape on a plane perpendicular to a penetrating direction of a hole becomes a rectangle in which a length in a direction between imaging elements is longer than a length in an optical axis direction of an imaging element.

5. The stereo camera according to claim 4, wherein the imaging-element heat dissipation part is formed such that a cross-sectional shape on a plane perpendicular to a penetrating direction of a hole becomes a rectangle in which a length in a direction between imaging elements is about twice as long as a length in an optical axis direction of an imaging element.

6. The stereo camera according to claim 3, wherein the imaging-element heat dissipation part is formed such that an extension portion of one side of a tubular shape becomes a surface along the imaging-element circuit board.

7. The stereo camera according to claim 3, wherein the imaging-element heat dissipation part has a tubular shape at two locations, and a joining portion having a tubular shape is formed to become a surface along the imaging-element circuit board.

8. The stereo camera according to claim 3, wherein the imaging-element heat dissipation part is formed to have a grid perpendicular to the imaging-element circuit board.

9. The stereo camera according to claim 3, wherein the imaging-element heat dissipation part has one opening of a hole formed in a tubular shape, the one opening being arranged on a side surface in a direction between imaging elements, and another opening being arranged on an upper surface.

10. The stereo camera according to claim 3, wherein the imaging-element heat dissipation part is a separate body from the casing, and is attached to a casing via a connection member.

11. The stereo camera according to claim 1, wherein the imaging-element heat dissipation part is arranged on a surface of the imaging-element circuit board opposite to a surface mounted with the imaging element, is formed into a tubular shape including a surface along the imaging-element circuit board, and is formed such that a side close to a circuit element mounted on the circuit board becomes larger than a side far from the circuit element.
